(19)

Europäisches
Patentamt
European
Patent Office
Office européen
des brevets

(11) **EP 3 988 291 A1**

(12) **EUROPEAN PATENT APPLICATION**

(43) Date of publication:
27.04.2022 Bulletin 2022/17

(21) Application number: 21203783.2

(22) Date of filing: 20.10.2021

(51) International Patent Classification (IPC):
$B32B\ 5/02$ (2006.01) $\quad$ $B32B\ 5/08$ (2006.01)
$B32B\ 7/05$ (2019.01) $\quad$ $B32B\ 7/12$ (2006.01)
$B32B\ 7/14$ (2006.01) $\quad$ $B32B\ 29/02$ (2006.01)
$B32B\ 29/08$ (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.10.2020 ES 202032266 U**

(71) Applicant: **Tempack Packaging Solutions S.L.
08907 L'Hospitalet de Llobregat - Barcelona (ES)**

(72) Inventors:
• **DIAZ, Xavier**
**L'Hospitalet de Llobregat (ES)**
• **CARRE, Andreu**
**L'Hospitalet de Llobregat (ES)**
• **ORRIOLS, Joan**
**L'Hospitalet de Llobregat (ES)**
• **IGLESIAS, Amanda**
**L'Hospitalet de Llobregat (ES)**

(74) Representative: **Balder IP Law, S.L.
Paseo de la Castellana 93
5ª planta
28046 Madrid (ES)**

(54) **MULTILAYER-BASED PRODUCTS AND ISOTHERMAL CONTAINER**

(57) The present invention relates to a layer-based product 102 for manufacturing isothermal containers comprising a first cardboard layer 1, a second cardboard layer 2, a third layer 3; and wherein the third layer 3 is placed between the first 1 and the second 2 cardboard layers, the third layer 3 being a cotton fibre layer, so that it is highly biodegradable and the recycling of which, once the cardboard is separated from the cotton, is technically and economically viable. In addition, these materials, cardboard and cotton, with which the layer-based product is manufactured, can be obtained by means of recycling.

EP 3 988 291 A1

**Description**

<u>**TECHNICAL FIELD**</u>

The present invention relates to a layer-based product and an isothermal container comprising said layer-based product.

<u>**BACKGROUND**</u>

The rapid rise and improvement of hot and cold chains, increasingly controlled with greater precision, leads to a need for developing isothermal containers. Some sectors stand out in this regard, such as the distribution of pharmaceutical and biotechnological products both for application to humans and for application to animals. These sectors require strict temperature control during the shipping of said products.

Additionally, the market demands alternative products with less environmental impact. This demand arises in part because isothermal containers are often not reused but directly disposed of because it is not economically profitable to reuse them. This requirement for products with less environmental impact has also been transferred to industry and, more particularly, to the manufacturers of pharmaceutical and biotechnological products, who transfer this requirement to the manufacturers of isothermal containers.

A layer-based product for manufacturing isothermal containers is already known in the state of the art, comprising a first cardboard layer, a second cardboard layer and a third layer placed between the first and second cardboard layers.

For example, US2010258574A1 discloses a portable isothermal box comprising an outer cover, an inner cover and an insulation board between both covers. The insulation board is made of compressed cellulose and the outer and inner covers are made of a material, such as corrugated cardboard, that can be recycled along with the compressed cellulose without disassembling the portable isothermal box. Therefore, isothermal boxes of this type require that the material of the insulating board is similar enough to the material of the outer and inner covers to be able to be recycled together, that is, without having to previously separate the insulating board from the covers. This has the drawback that the type of materials that can be used is greatly restricted.

Therefore, it would be advantageous to achieve a recyclable layer-based product that can be manufactured for the most part from recycled components, highly biodegradable, comprising only a few components, that is easy to disassemble to facilitate recycling and increase the biodegradability thereof, which provides the rigidity and thermal insulation required by isothermal containers and also has low manufacturing costs.

Furthermore, it would also be advantageous if this layer-based product could be assembled easily and quickly in the assembly of pallet shippers.

<u>**DESCRIPTION OF THE INVENTION**</u>

To overcome the drawbacks of the state of the art, a first aspect of the present invention proposes a layer-based product for manufacturing isothermal containers comprising:

a first cardboard layer,
a second cardboard layer,
a third layer;
wherein the third layer is placed between the first and the second cardboard layers;
and wherein the third layer is a cotton fibre layer.

The layer-based product comprises cardboard and cotton, materials that are highly biodegradable and the recycling of which, once the cardboard is separated from the cotton, is technically and economically viable. In addition, these materials, cardboard and cotton, with which the layer-based product is manufactured, can be obtained by means of recycling.

The cotton fibre layer is a good thermal insulator, it is cheap and its high flexibility facilitates the transport and handling thereof. However, on the other hand, its high flexibility prevents the use thereof in certain applications that require higher rigidity, such as the use thereof as a container wall. For this reason and with the aim of achieving a product with greater rigidity, the present invention proposes to place the cotton fibre layer between two cardboard layers. In this way a rigid product that is a good thermal insulator is achieved.

In some embodiments the cotton fibre layer is a compact non-woven cotton fibre layer. This cotton fibre layer is easily obtainable by recycling textile material because to obtain the cotton fibre layer, for example, it is sufficient to shred textile material (e.g. clothing) to undo the fabric into cotton fibres and subsequently compact the cotton fibres. In some of these embodiments the cotton fibres are attached by means of a binder, such as by hot melt fibres and/or by a thermosetting polymer. The use of a thermosetting polymer as a binder (such as, for example, a phenolic resin) makes it possible to achieve a cotton fibre layer with a high elastic modulus and to increase the resistance thereof to traction and to breaking due to bending. In some embodiments, the binder is fireproof.

The cotton fibre layer preferably has a high resistance to tearing, which makes it possible to facilitate, on the one hand, the handling thereof and, on the other hand, the cutting of the same to the desired dimensions thereof for use in the layer-based product. In addition, the cotton fibre layer preferably has low moisture absorption, which minimises the formation of mould in said layer, enabling the insulation requirements of the layer against humidity in the environment, for example during storage, to be less demanding.

In some embodiments of the layer-based product, the third layer comprises at least 80% by weight of cotton fibres. In this way, thanks to the fact that cotton is highly biodegradable, a certain biodegradability of the cotton fibre layer is achieved. Furthermore, thanks to the high thermal resistance of cotton, the thermal conductivity of the cotton fibre layer is not too high. In some of these embodiments, since it is common for the textile material to contain other materials in addition to cotton, the cotton fibre layer obtained by shredding the textile material may end up containing other materials commonly found in textile material, such as polyvinyl and/or nylon.

In some embodiments of the layer-based product the third layer has a density of at least 30 kg/m$^3$ and at most of 60 kg/m$^3$. In this way a balance is achieved between the thickness of the cotton fibre layer and the thermal conductivity of the cotton fibre layer. A lower density while maintaining the mass would increase the volume (and thus the thickness) of the cotton fibre layer, which may be undesirable for certain applications of the layer-based product. However, an increase in the density of the cotton fibre layer while maintaining the cotton fibre mass would decrease the thermal conductivity of the cotton fibre layer, so a thicker cotton fibre layer would be required to achieve the same thermal resistance and therefore the weight of the product would increase.

In some embodiments of the layer-based product the thermal resistance of the cotton fibre layer is at least 60% of the thermal resistance of the layer-based product, for example at least 70, 80 or 90% of the thermal resistance of the layer-based product. That is, most of the thermal resistance of the layer-based product is provided by the cotton fibre layer. It is known that the thermal resistance of a layer-based product can be calculated as the sum of the thermal resistance of each of the layers:

$$R_t = R_1 + R_2 + R_3$$

Wherein:

- $R_t$: is the total thermal resistance of the layer-based product.
- $R_1$, $R_2$, $R_3$ are respectively the thermal resistance of the first cardboard layer, the thermal resistance of the second cardboard layer and the thermal resistance of the cotton fibre layer measured in Km$^2$/W.

These thermal resistances are measured in the stacking direction of the layers.

The thermal resistance of each layer is calculated by inverting the thermal conductance of said layer:

$$R_x = \frac{1}{C_x}$$

Wherein:

- $R_x$: is the thermal resistance of a layer x.
- $C_x$: is the thermal conductance of the layer x.

In some embodiments, the thermal conductivity of the third layer is at least 0.015 W/mK and at most 0.05 W/mK, and more preferably at least 0.025 W/mK and at most 0.04 W/mK. In this way, compared to a cotton fibre layer that has a higher thermal conductivity and the same thickness, it is possible to minimise the heat flow through the layer-based product when the product is subjected to a specific temperature difference between the outer face of the first cardboard layer (that is, the face of the first cardboard layer that is farthest from the third layer) and the outer face of the second cardboard layer (that is, the face of the second cardboard layer that is farthest from the third layer). In some of these embodiments, the density of the cotton fibre layer is adjusted so that the cotton fibre layer has the desired thermal conductivity within the range of at least 0.015 W/mK and at most 0.05 W/mK, and more preferably within the range of at least 0.025 and at most 0.04 W/mK.

In some embodiments, the thickness is selected such that the thermal resistance of the cotton fibre layer is at

least 0.25 m$^2$k/W and at most 1 m$^2$k/W. In some embodiments, the thickness of the cotton fibre layer is at least 30 mm and at most 60 mm, in this manner, a compromise is reached between achieving a low-thickness cotton fibre layer and a sufficiently high thermal resistance per surface unit.

In some embodiments the layer-based product comprises adhesive strips between the first cardboard layer and the third layer and adhesive strips between the second cardboard layer and the third layer. In this way, the layer-based product can be easily assembled from the two cardboard layers and the cotton fibre layer, since it is sufficient to arrange adhesive strips between the first cardboard layer and the cotton fibre layer as well as between the second cardboard layer and the cotton fibre layer and press the first layer with the cotton fibre layer together and press the second layer with the cotton fibre layer together.

In some embodiments of the layer-based product, the area covered by the adhesive strips on each of the two faces of the third layer is at least 10% and at most 20% of the face area, and more preferably at least 12% and at most 16% of the face area. This extension of the adhesive makes it possible to achieve a balance between achieving a sufficient adhesion force between the cotton layer and each of the cardboard layers to prevent a "spontaneous" separation and, furthermore, allowing the cardboard layers to be easily separated from the cotton layer when the layer-based product reaches the end of its useful life in order to, among other reasons, minimise cross contamination. A greater spread of the adhesive would increase the adhesion force between each of the cardboard layers and the cotton fibre layer making it difficult to separate the cardboard layers and the cotton fibre layer. This would not only imply a higher cost due to the consumption of a greater amount of adhesive and the greater difficulty in separating the layers, but it would also increase cross contamination, that is, the amount of material of a layer (e.g. cotton) that is mixed with material of another layer (e.g. cardboard) as a consequence of the separation of the layers. Cross contamination is especially disadvantageous when the materials that make up the mixture are to be separated before recycling.

In some embodiments of the layer-based product, one side of each adhesive strip is in contact with the cotton fibres of the third layer and the other side is in contact with the first cardboard layer or the second cardboard layer. In this way, the product comprises only a few components, it is very simple and easy to assemble, as there are no interposed layers between the adhesive and the cotton fibre layer or between the adhesive and the cardboard layer to which the adhesive is attached.

In some embodiments of the layer-based product, the first cardboard layer is a corrugated cardboard layer and/or the second cardboard layer is a corrugated cardboard layer. In some of these embodiments, the first cardboard layer comprises two sheets between which the corrugations of the first cardboard layer are arranged, and

the second cardboard layer comprises two sheets between which the corrugations of the second cardboard layer are arranged;
the two sheets of the first cardboard layer being separated from the two sheets of the second cardboard layer. Compared to other types of cardboard layer, such as a cardboard layer consisting of a plane, the corrugated cardboard layer makes it possible to provide greater rigidity to the layer-based product.

In some embodiments of the layer-based product:

the first corrugated cardboard layer is a double channel cardboard pad or a single channel cardboard pad, and/or the second corrugated cardboard layer is a double channel cardboard pad or a single channel cardboard pad. The single channel corrugated cardboard pad provides less rigidity than double channel corrugated cardboard pad but requires less thickness than double channel corrugated cardboard pad.

In some embodiments of the layer-based product, the face of the first cardboard layer and the face of the second cardboard layer that is farthest from the third layer are coated with Kraft liner. The coating with Kraft liner enables water absorption to be reduced on the face of the cardboard layer that is coated with Kraft liner. In addition, the coating with Kraft liner enables the rigidity and resistance of the cardboard layer that is coated with Kraft liner to be increased, thus increasing the rigidity and resistance of the layer-based product. This increased resistance occurs because the Kraft liner has virgin fibres that are relatively longer than other types of degradable coating.

In some embodiments of the layer-based product the lateral periphery of the third layer is coated with Kraft liner. In some of these embodiments the Kraft liner coating is fixed to the lateral periphery of the layer-based product by interposing a glue layer between the layer-based product and the Kraft liner. The coating of the cotton fibre layer with Kraft liner enables the inlet of moisture into the cotton fibre layer to be minimised, as well as the water condensation on the cotton fibres to be minimised. Furthermore, said coating hides the lateral periphery of the layer-based product, which includes the thickness of the cotton fibre layer, improving the appearance of the layer-based product.

In some embodiments the layer-based product is a panel. The panel geometry is advantageous for installing the layer-based product on structures.

In some embodiments, the panel has rectangular faces, one side of which measures at least 600 mm and at most 1700 mm, for example at least 800 mm and at most 1500 mm, and the other side of which measures at least 400 mm and at most 1400 mm, for example at least 600 mm at most 1200 mm.

A second aspect of the present invention proposes an isothermal container comprising several walls and wherein one wall comprises the panel according to the first aspect of the invention.

In some embodiments, the isothermal container is a container with a parallelepiped shape comprising an upper wall, a lower wall and four lateral walls wherein each of the walls comprises at least one panel in accordance with the first aspect of the invention. In this way, by adjusting the thickness and thermal conductivity of the cotton fibre layer, for example between 0.015 W/mK and 0.05 W/mK or 0.025 W/mK and 0.04 W/mK, the thermal insulation that the container provides the cargo inside can be adjusted, enabling the container to be adapted to the range of temperatures to be kept inside the container for a predetermined time. It has been proven that these containers are suitable for intercontinental air transport at controlled temperature of expensive products such as biotechnological products, vaccines or delicatessen foods and also withstand the mechanical stresses associated with transport by lorry or cargo plane. Furthermore, it has been observed that, by suitably adjusting the area covered by the adhesive on each of the two faces of the third layer so that it is at least 10% and at most 20% of the face area, and more preferably at least 12% and at most 16% of the face area, the container is prevented from exhibiting a spontaneous separation of the layers during the use thereof and simultaneously the recycling of the container is facilitated, since excessive force is not required to separate the layers of the layer-based product.

In some embodiments, the isothermal container comprises a first panel according to the first aspect of the invention and a second panel according to the first aspect of the invention; the first panel has a recess in the portion of the panel that attaches a face of the panel to a lateral edge of the panel and the second panel has suitable dimensions to fit the recess of the first panel. In this way, a wall of an isothermal container can be formed by fitting the second panel into the recess of the first panel. This fitting enables the second panel to be easily separated from the container and thus to open the container. This is because the recess of the first panel enables the second panel to be disengaged by tilting it with respect to the first panel.

In some embodiments of the isothermal container, the first lateral wall comprises two panels according to the first aspect of the invention and one of the two panels is collapsible and/or removable. In this way, the container is equipped with access to the content thereof from the outside. These panels have the advantage that they allow access to the goods without having to disassemble a large portion of the container or to pierce it.

A third aspect of the present invention proposes a pallet shipper comprising an isothermal container according to the second aspect of the invention.

A fourth aspect of the present invention is related to a method of manufacturing the third layer of the layer-based product according to the first aspect of the present invention. This method comprises the steps of:

- shredding cotton,
- pressing the shredded cotton.

In this way a flexible pad can be obtained which can be subsequently cut to the suitable dimensions to form a layer-based product according to the first aspect of the invention. In some of these embodiments the method comprises a step of mixing ground cotton with binder prior to the pressing step.

The cotton shredding step may relate to a step of shredding a mixture of textile material, for example clothing to be recycled, wherein at least 80% by weight of the mixture of textile material is cotton.

A fifth aspect of the present invention relates to a method for assembling the layer-based product according to the first aspect of the present invention. This method comprises the steps of:

- applying adhesive strips on both sides:

  ◦ on one face of the third layer and
  ◦ on one face of the first layer and/or one face of the second layer;

- or applying adhesive strips on both sides:
  ◦ on one face of the first layer and on one face of the second layer;
- or applying adhesive strips on both sides:
  ◦ on both sides of the third layer
- placing the first layer on the third layer and the second layer under the third layer so that the first layer is adhered to the third layer by means of adhesive strips and the second layer is adhered to the third layer by means of adhesive strips.

In some embodiments wherein the layer-based product defines three directions: a longitudinal direction, a first transverse direction perpendicular to the longitudinal direction, and a second transverse direction perpendicular to the first longitudinal direction and the first transverse direction, wherein the first transverse direction follows the width direction of the product and the second transverse direction follows the thickness direction of the product; the length of the product is greater than the width of the product and four adhesive strips are arranged, each oriented in the first transverse direction, distributed along the length of the product so that two of the strips are each arranged at a longitudinal end of the product. In this way, an adhesion between the layers is further facilitated, that is strong enough not to fall apart during the use of the product in an isothermal container, but not too high, allowing an easy separation of the layers at the end of the life cycle of the layer-based product. This easy separation facilitates the recycling of the layer-based product and reduces cross contamination between the different materials of the product.

In some embodiments, for example those in the previous paragraph, the strips measure between 30 mm and 80 mm wide, the length thereof being equal to the width of the layer-based product. In this way, the strip area facilitates an adhesion between the layers that is strong enough not to fall apart during the use of the product in an isothermal container, but not too high, allowing an easy separation of the layers at the end of the life cycle of the layer-based product.

In some embodiments the method comprises the additional step of:

- covering one lateral edge of the third layer with Kraft liner.

In this way, the inlet of moisture into the cotton of the third layer and the water condensation on the cotton of the third layer are minimised.

In some of these embodiments, the Kraft liner is self-adhesive, thus easily adhering to the cotton and/or to at least one of the first and second cardboard layers.

The different aspects and embodiments of the invention defined above may be combined together, provided that they are mutually compatible.

Additional advantages and characteristics of the invention will become apparent from the detailed description that follows and will be particularly indicated in the attached claims.

## BRIEF DESCRIPTION OF THE DRAWINGS

As a complement to the description, and for the purpose of helping to make the features of the invention more readily understandable, in accordance with preferred practical exemplary embodiments of the layer-based product of the invention, said description is accompanied by a set of figures which, by way of illustration and not limitation, represent the following:

Figure 1 shows different embodiments of layer-based products according to the invention.

Figures 2A and 2B show different perspective views of an embodiment of a layer-based product according to the invention.

Figure 3A shows a single channel cardboard pad for an embodiment of the layer-based product according to the invention.

Figure 3B shows a double channel cardboard pad for an embodiment of the layer-based product according to the invention.

Figure 4A shows a lateral view of an embodiment of a layer-based product according to the invention.

Figure 4B shows a perspective transversal cross section view of an embodiment of a layer-based product according to the invention.

Figure 5 shows a cotton fibre layer for an embodiment of the layer-based product according to the invention.

Figure 6 shows a cotton fibre layer with adhesive strips for an embodiment of the layer-based product according to the invention.

Figure 7 shows a first cardboard layer with adhesive strips for an embodiment of the layer-based product according to the invention.

Figure 8 shows a schematic view of a thermal resistance circuit representing the thermal behaviour of an embodiment of the layer-based product according to the invention.

Figure 9 shows an exploded view of an embodiment of an isothermal container with goods according to the invention.

Figure 10 shows an inner shell and an intermediate shell of an embodiment of an isothermal container according to the invention.

Figure 11 shows an exploded view of an inner shell and of an intermediate shell of an embodiment of an isothermal container according to the invention.

Figure 12 shows an exploded view of an embodiment of an isothermal container with goods according to the invention.

Figure 13 shows an enlarged view of the bonding between two adjacent panels of an embodiment of an isothermal container according to the invention.

Figure 14 shows an exploded view of an inner shell and an intermediate shell with goods of an embodiment of an isothermal container according to the invention.

Figure 15 shows an embodiment of a pallet shipper according to the invention.

## DESCRIPTION OF A PREFERRED EMBODIMENT OF THE INVENTION

In the description of the possible preferred embodiments of the invention, it is necessary to give numerous details to enable a better understanding of the invention. Even so, it will be apparent to the person skilled in the art that the invention can be implemented without these specific details. Furthermore, the well-known features have not been described in detail to avoid unnecessarily complicating the description.

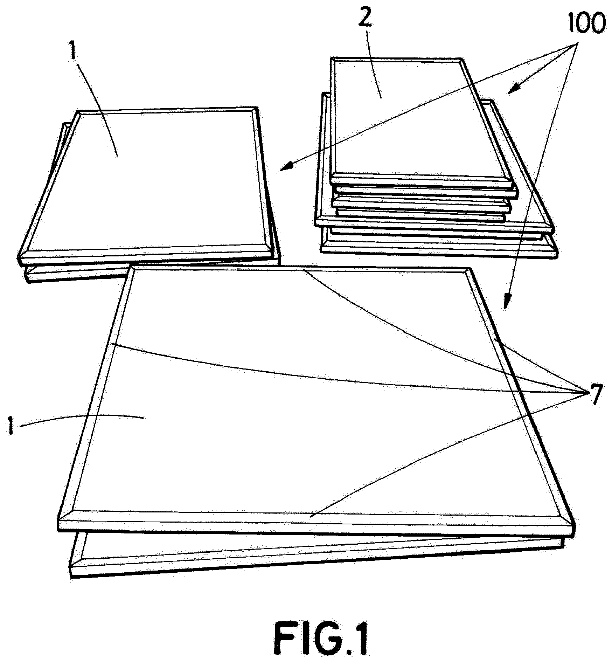

Figure 1 shows layer-based products 100 in the shape of a rectangular panel of different dimensions. Each of these products has two layers 1, 2 arranged opposite each other and four lateral edges 7. Each of the two layers 1, 2 is a cardboard layer. The lateral edges 7 are covered with Kraft liner strips adhered to the two layers 1, 2 of the layer-based product. The two layers 1,2 and the Kraft liner coating conceal a third layer, made of cotton fibres, inside the layer-based product 100.

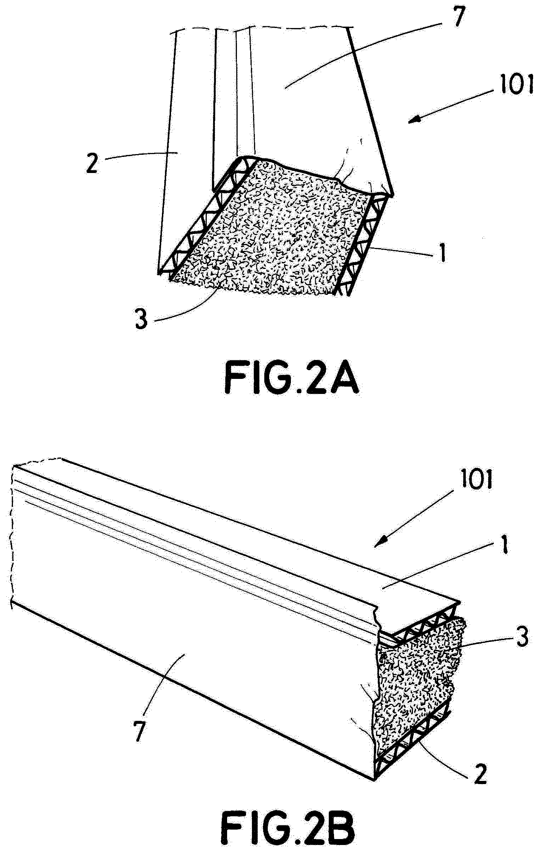

Figures 2A and 2B show another embodiment of the layer-based product according to the invention wherein the third cotton fibre layer 3 is observed between a first cardboard layer 1 and a second cardboard layer 2. The third layer 3 is covered on one of the lateral edges 7 of the layer-based product (101) by means of a Kraft liner coating and uncovered on the rest of the lateral edges of the layer-based product (101) so that the third layer 3 is visible.

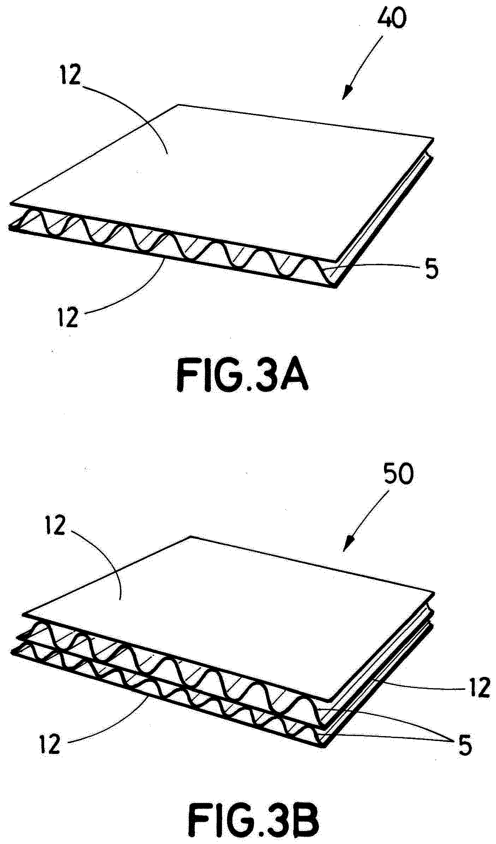

Figures 3A and 3B illustrate different types of corrugated cardboard pads that can be used as the first layer 1 or second layer 2 of the layer-based product according to the invention. Figure 3A shows a single channel corrugated cardboard pad 40. The single channel corrugated cardboard pad 40 has cardboard corrugations 5 arranged in a gap defined by two cardboard sheets 12 that are parallel and in contact with said sheets 12. These corrugations 5 make it possible to increase the resistance to breakage and to bending of the pad 40 and to increase the shock absorption in the sheets 12. Figure 3B shows a double channel corrugated cardboard pad 50. The double channel corrugated cardboard pad 50 has three parallel cardboard sheets 12 stacked so that two gaps are defined between the sheets 12. Two of the cardboard sheets 12 delimit the cardboard pad 50 while the third cardboard sheet 12 separates the two gaps. Cardboard corrugations 5 are arranged in each of the gaps in contact with the sheets 12 that delimit the gap. The presence of two hollows with corrugations 5 instead of one, contributes to a greater resistance to breakage and bending of the cardboard pad 50, as well as to a greater shock absorption in case of impact on the outer sheets 12 of the cardboard pad 50.

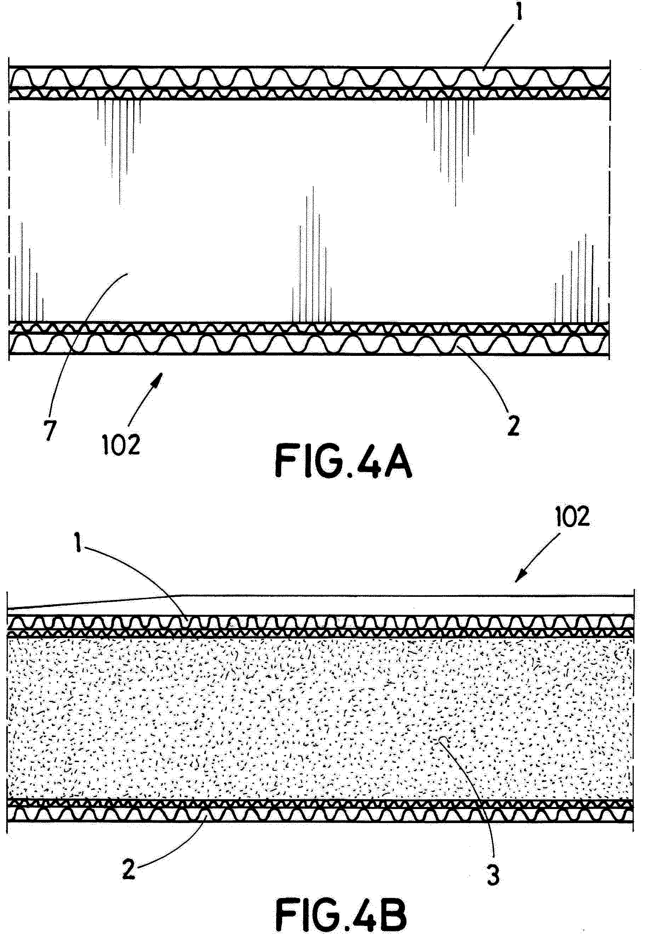

Figure 4A shows a lateral view of a layer-based product 102 wherein the first layer 1 and the second layer 2 are double channel corrugated cardboard pads. As can be seen in Figure 4A, the corrugations of the first cardboard layer 1 and of the second cardboard layer 2 closest to the third cotton layer 3 have less thickness than the corrugations that are farthest from the third layer 3. The lateral edge 7 of the third layer 3 is coated with Kraft liner adhered to the fibres of the third layer 3. The Kraft liner coating covers the lateral edge 7 of the third layer 3 completely, thus isolating the third layer 3 from the environment.

Figure 4B is a perspective view of a transverse cross section of the embodiment shown in Figure 4A so that the third cotton fibre layer 3 is observed.

In some embodiments of the layer-based product, the third cotton fibre layer 3 is a felt having at least 80% by weight of cotton fibres conglomerated with a thermosetting phenolic resin that can be fireproof, achieving a third layer 3 which has the following features:

| | |
|---|---|
| Density | 60 kg/m$^3$ |
| Thermal conductivity | 0.034 W/mK |
| Mould resistance | No mould or odours are observed after subjecting the third layer 3 to 168h at 38 °C and 95%HR according to WSS-M99P32-A/05 |
| Flammability | Euroclass B s1 d0 according to UNE EN ISO 11925-2:2002 and UNE EN 13823:2002 |
| Odour | According to WSS-M99P32-A/05 and BO 131-01/100:<br>$\leq$ 3; 24h at r.t.<br>$\leq$ 3; 24h at 40 °C<br>$\leq$ 3; 2h at 80 °C |

(continued)

| Resistance to temperature cycles | No cracks, no dimensional changes, no lifting or other changes in appearance are observed after subjecting the third layer 3 to the following cycle according to WSS-M99P32-A/05:<br>5 hours at -35 °C<br>30 min at 23 °C-50 %HR<br>5 hours at 80 °C<br>30 min at 23 °C-%50 %HR<br>2h at 50 °C-95°HR<br>30 min at 23 °C-50 %HR<br>5 hours at -35 °C<br>30 min at 23 °C-50 %HR<br>5 hours at 80 °C |
|---|---|
| Resistance to temperature | No breaks, no cracks, no dimensional changes, no lifting or other changes in appearance are observed after subjecting the third layer 3 to 168 hours at 80 °C +/- 2 °C according to WSS-M99P32-A/05. |

In some of these embodiments of the third layer 3, the sum of the percentage by weight of the cotton fibres and binder is 99% by weight of the third layer 3.

In other embodiments of the layer-based product, the third cotton fibre layer 3 is made up of cotton fibres conglomerated by means of hot melt fibres and has the following features:

| Density | At least 25.5 kg/m$^3$ and at most 34.5 kg/m$^3$ calculated according to standard EN 1602:2013 |
|---|---|

| Reaction to fire | "F" according to standard EN 13501-1 |
|---|---|
| Thermal conductivity | 0.034 W/mK according to standard EN 12667:2002 (category I) |
| Tensile strength parallel to the third layer 3 | 10 kPa according to standard EN 1608:2013 |
| Dimensional stability | DS (70,-) 3<br>DS (70.90) 3<br>According to standard EN 1604:2013 |
| Water absorption | 6 kg/m$^2$ according to standard EN 1609:2013, method A |
| Water vapour permeability | 1 to 4 according to standard EN 12086:2013 |

The third cotton fibre layer 3 can be manufactured by shredding textile material containing cotton, such as worn clothes, obtaining a tangle of cotton fibres that may contain traces of other materials present in the textile material. For example, the starting textile material comprises more than 80% by weight of cotton. Starting from an unshredded textile material with a sufficiently high percentage by weight of cotton fibres, a subsequent separation process can be prevented which would have the objective of raising the percentage by weight of cotton fibres in the tangle sufficiently so that the layer-based product comprises at least 80% cotton fibres. The tangle is then mixed with 15% by weight of binder (for example, a phenolic-type thermosetting resin) and pressed, so that a compact cotton fibre conglomerate is obtained. The material can be pressed into a pad shape of between 30 mm and 60 mm thick, resulting in a flexible pad. Figure 3A shows an example of a third cotton fibre layer 3 obtained by means of the above method. The third layer 3 may be in the shape of a rectangle, the sides of which measure 1180 mm and 980 mm respectively.

From the third cotton fibre layer 3, a layer-based product 100, 101, 102 can be manufactured as described below.

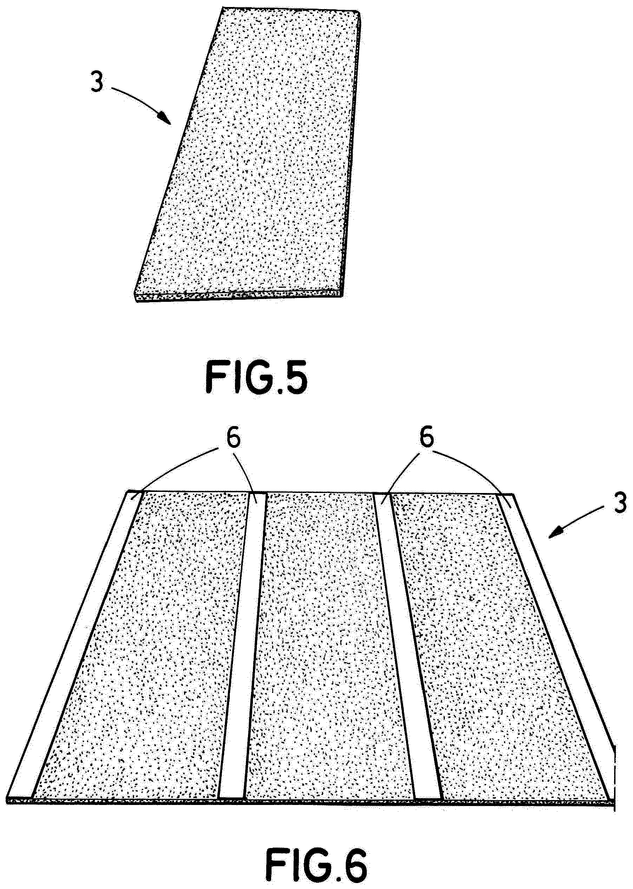

Double-faced adhesive strips 6 are adhered to one of the faces of the third cotton fibre layer 3. The distribution of the adhesive strips 6 on the face of the third cotton fibre layer 3 can be as that illustrated in Figure 6. This figure shows a third cotton fibre layer 3 in the shape of a pad with rectangular faces, each of which extends in a longitudinal direction and in a transverse direction perpendicular to the longitudinal direction. The dimension of each face in the longitudinal direction is greater than the dimension of the face in the transverse direction. Four adhesive strips 6 are extended in the transverse direction of the face of the cotton fibre layer 3. Two of the four adhesive strips 6 are arranged at the longitudinal ends of the face, while the other two strips 6 are arranged closer to the centre of the face, thus increasing the adhesion of the ends of the face of the third cotton fibre layer 3. Next, a second cardboard layer 2 is pressed against the face of the third cotton fibre layer 3 with adhesive strips 6 so that the second cardboard layer 2 adheres to the third layer 3. Thanks to the distribution of the adhesive strips 6 described above, clearances are minimised at the ends of the face of the third cotton layer 3 at the attachment thereof with the second cardboard layer 2. This process could have been carried out by first arranging the strips 6 with double-faced adhesive on top of one face of the second cardboard layer 2 and subsequently pressing the face of the second cardboard layer 2 against a pad of cotton fibres. This process is described below with reference to the first cardboard layer 1 instead of the second cardboard layer 2.

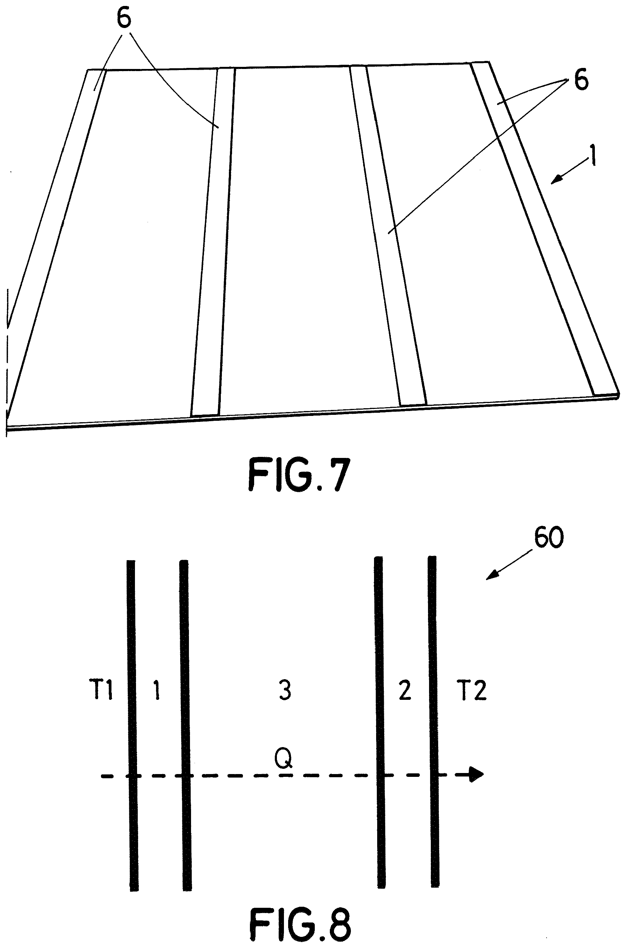

Figure 7 shows a first cardboard layer 1 in the shape of a pad with rectangular faces, each of which extends in a longitudinal direction and in a transversal direction perpendicular to the longitudinal direction. The dimension of each face in the longitudinal direction is greater than the dimension of the face in the transverse direction. On top of one of the faces of the first cardboard layer 1 four double-faced adhesive strips 6 are arranged extending in the longitudinal direction. These four double-faced adhesive strips 6 are evenly distributed over the face of the first cardboard layer 1 so that one of the four strips 6 is arranged at a longitudinal end of the face of the cardboard layer 1 and another of the four strips 6 is arranged at the opposite longitudinal end of the face of the cardboard layer 1. In this way the adhesion of the ends of the face of the first cardboard layer 1 is increased, enabling a more robust attachment with the third cotton fibre layer 3. Next, the face of the first cardboard layer 1 with adhesive strips 6 is pressed against a third cotton fibre layer 3, so that it adheres to the third layer 3. Thanks to the distribution of the adhesive strips 6 described above, clearances are minimised at the ends of the face of the third cotton layer 3 at the attachment thereof with the first cardboard layer 1. This attachment between the third cotton fibre layer 3 and the first cardboard layer 1 could have been made as described above for the attachment between the third cotton fibre layer 3 and the second cardboard layer 2, replacing the second cardboard layer 2 with the first cardboard layer 1.

Figure 8 shows a thermal resistance circuit 60 that describes an approximation to the thermal behaviour of the layer-based product 102. This circuit shows that the outer face of the first cardboard layer 1 is in contact with an environment at temperature T1. The outer face of the second cardboard layer 2 is in contact with an environment at a temperature T2 different from the temperature T1. As a result, a heat flow is produced that passes through the layer-based product 102 and follows the stacking direction of layers 1, 2, 3 of the layer-based product 102. The thermal resistance of the product 102 to the heat flow Q is equal to the sum of the individual thermal resistances of each of the layers 1, 2, 3. The thermal resistance of a layer 1, 2, 3 can be calculated by multiplying the thermal conductivity of the layer 1, 2, 3 by the thickness of the layer 1, 2, 3. In this way the heat flux Q can be estimated as:

$$Q = \frac{T1 - T2}{R_1 + R_2 + R_3}$$

Wherein:

$R_1$: is the thermal resistance of the first cardboard layer 1;
$R_2$: is the thermal resistance of the second cardboard layer 2;
$R_3$: is the thermal resistance of the third cotton fibre layer 3.

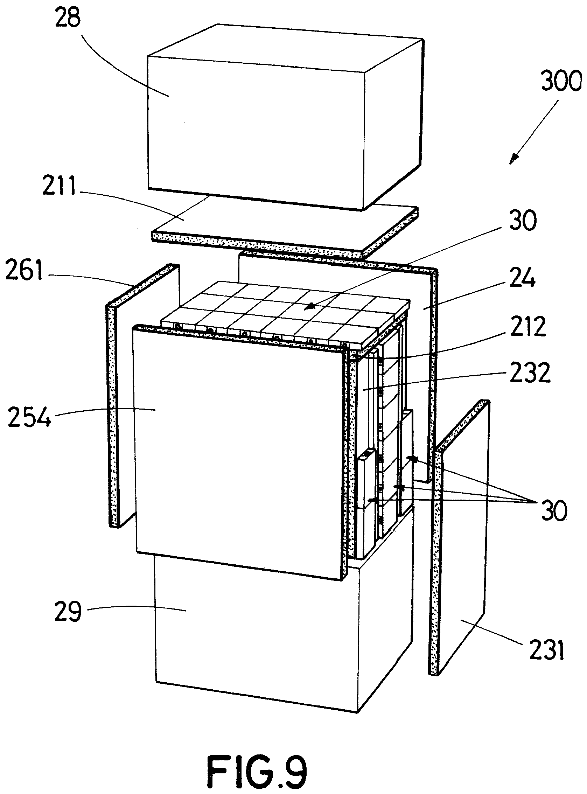

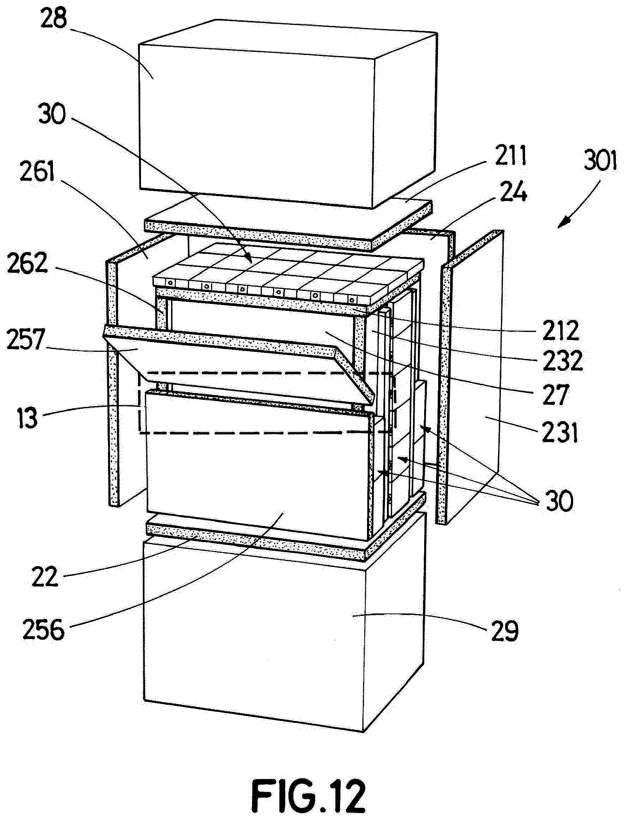

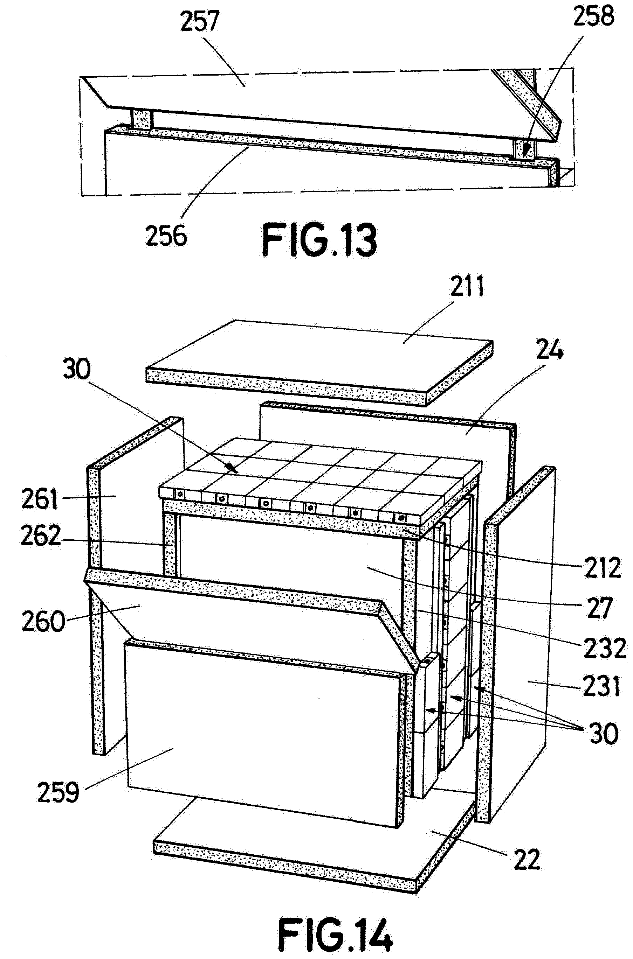

Figure 9 shows an isothermal container 300 in the shape of a cuboid. Inside the isothermal container 300, goods 27 (visible in Figures 12 and 14) and coolers 30 are arranged. The coolers 30 (also known in the isothermal container sector as cold units) surround the goods 27 decreasing the heat exchange between the goods 27 and the exterior of the isothermal container 300 when the exterior is at a temperature higher than that of the goods 27. In this way, if the outside of the container 300 is at a higher temperature than the goods 27, the goods 27 are kept at a lower temperature for a longer time. The structure of the isothermal container 300 has three shells: an inner shell, an outer shell, and an intermediate shell arranged between the inner shell and the outer shell. Each of these shells is formed by layer-based products in the shape of a panel with rectangular faces identical to the layer-based product 102 with the difference that the lateral edges are uncoated. For the sake of conciseness of the description, these layer-based products have been referred to as "panels" hereinafter.

The inner shell of the isothermal container 300 is made up of three panels 212, 232, 262 (not visible in this figure). The panel 232 is arranged parallel to the panel 262. The panel 212 is arranged perpendicular to the panels 232 and 262 and rests on lateral edges of said panels 232, 262. These panels are arranged between the goods 27 and the coolers 30, so that the coolers 30 do not come into direct contact with the goods 27, making it possible to decrease the temperature gradient in the goods 27 compared to if the coolers 30 were in direct contact with the goods 27. Furthermore, if the coolers 30 were in direct contact with the goods 27, these contact points of the goods 27 could get too cold and generate an accelerated consumption of the cold stored in the coolers 30.

The intermediate shell is made up of six panels 211, 231, 254, 261, 24, 22 (not visible) arranged to form the faces of a cuboid. The panel 211 is arranged parallel to the panel 212, leaving coolers 30 arranged between the panels 211 and 212. The panel 231 is arranged parallel to the panel 232, leaving coolers 30 arranged between the panels 231 and 232. The panel 261 is arranged parallel to the panel 262, leaving coolers 30 arranged between the panels 261 and 262. The panels 24 and 254 are arranged parallel to each other and perpendicular to the panels 211, 231, and 261. The panel 22 is arranged parallel to the panel 211. In this way the panels 211, 231, 254, 261, 24 and 22 form an intermediate shell in the shape of a cuboid that covers the goods 27 and the coolers 30 completely. Preferably the contact regions between the panels 211, 231, 254, 261, 24 and 22 are sufficiently pressed together so as to prevent heat leakage through said contact regions, so that the shell provides sufficient thermal insulation for the goods 27 and the coolers 30 with respect to the outside of the intermediate shell.

The outer shell is made up of two cardboard boxes 28, 29, each box having the shape of an open cuboid on one of the faces thereof and each box 28, 29 having appropriate dimensions to cover the entire intermediate shell. The boxes 28, 29 are used to stiffen the intermediate shell and to add an additional layer to the container 300 that increases the thermal resistance of the container 300. The boxes 28, 29 have internal dimensions that adjust to the external dimensions of the intermediate shell, so that when the intermediate shell is inserted into the boxes 28, 29, these boxes exert a compressive stress on the cuboid formed by the intermediate shell pressing the panels 211, 231, 254, 261, 24, 22 against each other. In this way, the stiffness of the intermediate shell structure can be increased and heat leakage through the contact regions of the intermediate shell panels can be reduced. In this way, by inserting opposite ends of the intermediate shell in each of the boxes 28, 29, it is possible to cover the intermediate shell completely, and the panels 211, 231, 24, 254, 261 and 22 (not visible) are pressed into the cuboid arrangement thereof by the boxes 28, 29. In this arrangement the boxes 28, 29 can be mechanically attached to one another by means of, for example, adhesive strips.

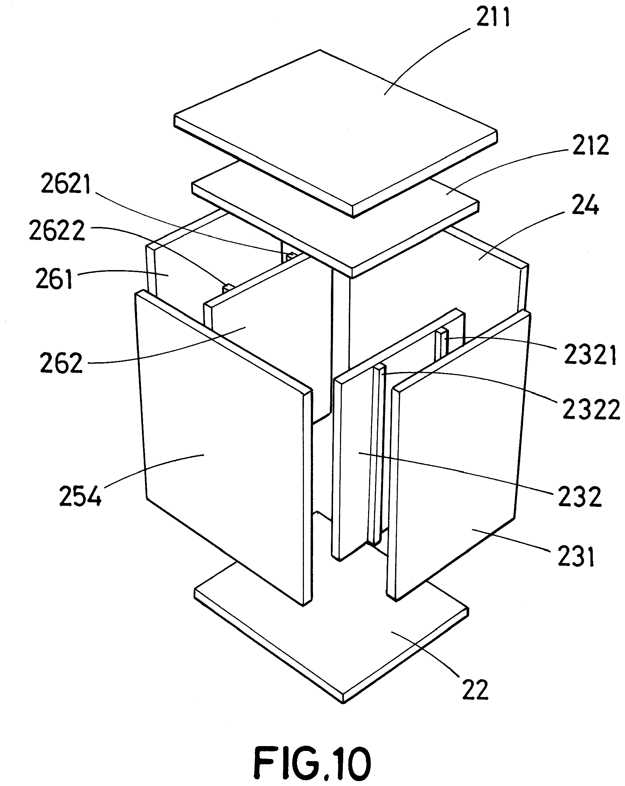

Figure 10 shows the inner shell and the intermediate shell of an embodiment of an isothermal container. These shells are the same as those described in Figure 9 except for the difference that the lateral edges of the panels are coated with Kraft liner. This figure shows a clearer view than Figure 9 of projections 2321, 2322, 2621, 2622 that enable the portions of the panels 232, 262 on which the coolers 30 are arranged to be delimited.

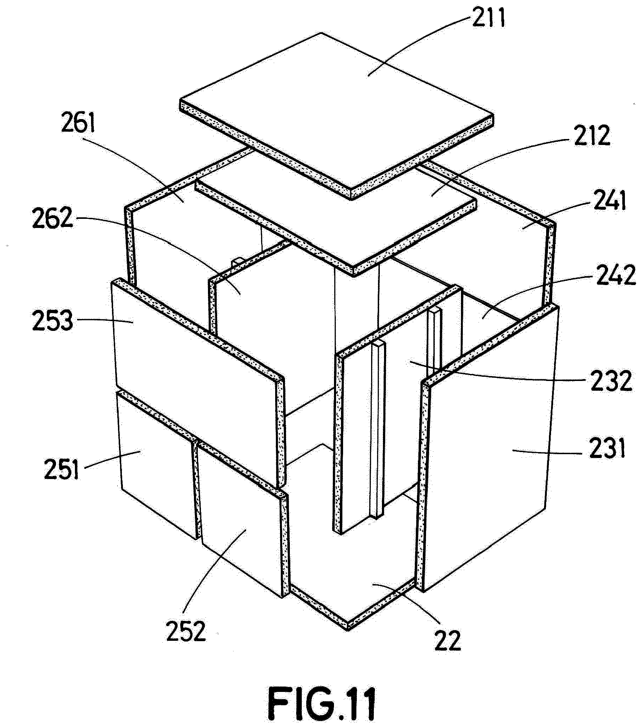

Figure 11 shows the inner shell and the intermediate shell of an embodiment of an isothermal container. The inner shell is identical to that described with reference to Figure 9. The intermediate shell is the same as that described with reference to Figure 7 with the difference that the panel 254 has been replaced by three panels 251, 252, 253 and the panel 24 has been replaced by the panels 241 and 242. The three panels 251, 252, 253 are arranged in the same plane as the panel 254 of Figure 9. The panels 251, 252 have a smaller extension than the panel 253. The panels 251, 252, 253 make contact with each other at the lateral edges thereof. This contact must be firm enough to ensure effective thermal insulation, preventing heat leakage through the contact regions. This arrangement of the panels 251, 252, 253 is advantageous because it enables access to the goods 27 in the container more easily, since it is sufficient to collapse one of the panels 251, 252 of smaller extension to access the goods 27.

Figure 12 shows an isothermal container 301 identical to the isothermal container described with reference to Figure 9 with the difference that the panel 254 of the intermediate shell has been replaced by two panels 256, 257. The two panels 256, 257 are arranged in the same plane as the panel 254 of Figure 9. The panels 256 and 257 are attached together by means of an attachment 13 clearly observed in Figure 13. This attachment comprises a recess 258 in the panel 256 into which the panel 257 can be fitted. The recess 258 is an opening of the panel 256 by a lateral edge 7 of the panel and by one of the faces thereof, in particular by the face of the panel that is closest to the goods 27. In this way, the removal of the panel 257 and the consequent access to the goods 27 can be facilitated, since it is sufficient to slightly rotate the panel 257 around an axis that follows the direction of the recess 258 to disengage the panel 257 from the recess 258. The removal of the panel 257 is easier once it has been disengaged from the recess 258.

Figure 14 shows an inner shell and an intermediate shell of an isothermal container. The inner shell is identical to that described with reference to Figure 9. The intermediate shell is identical to that described with reference to Figure 9 with the difference that the panel 254 has been replaced by two panels 259, 260. The two panels 259, 260 are arranged in the same plane as the panel 254 of Figure 9. The two panels 259, 260 make contact with each other by one of the lateral edges thereof. This contact must be firm enough to ensure effective thermal insulation, that is, to avoid "gaps" between the edges of the panels. This arrangement of the panels is advantageous because it enables access to the goods 27 in the container more easily, since it is sufficient to collapse one of the panels 259, 260 with respect to the other to access the goods 27.

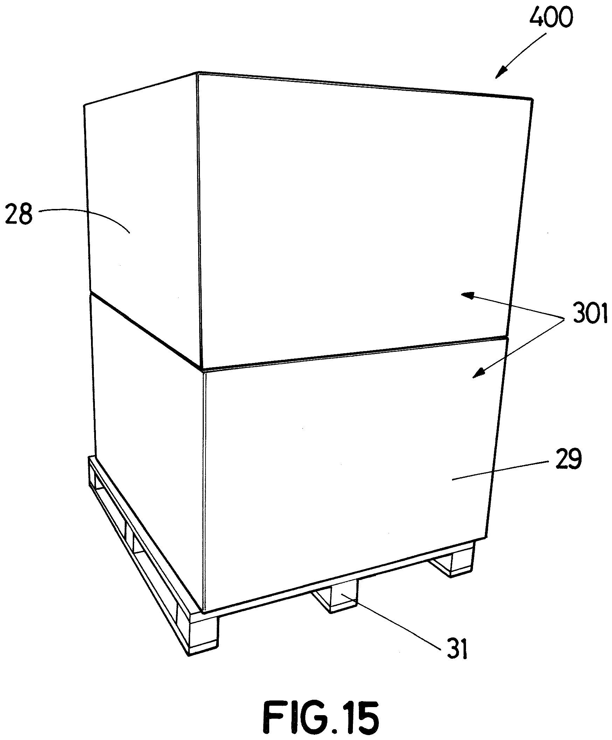

Figure 15 shows a pallet shipper 400 wherein the outer shell of an isothermal container 301 made up of boxes 28, 29 is shown. The pallet shipper comprises a pallet 31 that supports the isothermal container 301.

In light of this description and figures, the person skilled in the art may understand that the invention has been described according to some preferred embodiments thereof, but that multiple variations may be introduced in said preferred embodiments without detracting from the object of the invention as claimed.

In this text, the term "comprises" and its derivations (such as "comprising", etc.) should not be understood in an excluding sense. That is, these terms should not be interpreted as excluding the possibility that what is described and defined may include more elements, steps, etc.

**Claims**

1. A layer-based product (102) for manufacturing isothermal containers comprising:

> a first cardboard layer (1),
> a second cardboard layer (2),
> a third layer (3); and
> wherein the third layer (3) is placed between the first (1) and the second (2) cardboard layers;
> **characterised in that** the third layer (3) is a cotton fibre layer.

2. The layer-based product (102) according to claim 1, wherein the third layer (3) comprises at least 80% by weight of cotton fibres.

3. The layer-based product (102) according to any one of the preceding claims, wherein the third layer (3) has a density of at least 30 kg/m$^3$ and at most 60 kg/m$^3$.

4. The layer-based product (102) according to any one of the preceding claims, wherein the thermal resistance of the third layer (3) is at least 60% of the thermal resistance of the layer-based product (102).

5. The layer-based product (102) according to any one of the preceding claims, wherein the thermal conductivity of the third layer (3) is at least 0.015 W/mK and at most 0.05 W/mK, and more preferably at least 0.025 W/mK and at most 0.04 W/mK.

6. The layer-based product (102) according to any one of the preceding claims, additionally comprising adhesive strips (6) between the first cardboard layer (1) and the third layer (3) and adhesive strips (6) between the second cardboard layer (2) and the third layer (3).

7. The layer-based product (102) according to claim 6 wherein the area covered by the adhesive strips (6) on each of the two faces of the third layer (3) is at least 10% and at most 20% of the face area, and more preferably at least 12% and at most 16% of the face area.

8. The layer-based product (102) according to any one of claims 6 and 7 wherein one face of each adhesive strip (6) is in contact with the cotton fibres of the third layer (3) and the other face is in contact with the first cardboard layer (1) or with the second cardboard layer (2).

9. The layer-based product (102) according to any one of the preceding claims, wherein the face of the first cardboard layer (1) and the face of the second cardboard layer (2) that are farthest from the third layer (3) are coated with Kraft liner.

10. A panel according to claim 13 with rectangular faces, one side of which measures at least 600 mm and at most 1700 mm and the other side of which measures at least 400 and at most 1400 mm.

11. An isothermal container (301) comprising walls and wherein a wall comprises a product according to any of the preceding claims.

12. The isothermal container (301) with a parallelepiped shape comprising an upper wall (211), a lower wall (22) and four lateral walls (231, 24, 261, 256, 257) and wherein each of the walls comprises a panel according to any of claims 1 to 10.

13. The isothermal container according to claim 12, wherein a first lateral wall of the container comprises two panels (259, 260), each of the two panels (259, 260) being a panel according to claim 1 to 10, and wherein one of the two panels (259, 260) is collapsible and/or removable.

**14.** A pallet shipper (400) comprising an isothermal container according to any one of claims 11 to 13.

**FIG.1**

**FIG.2A**

**FIG.2B**

**FIG.3A**

**FIG.3B**

**FIG.4A**

**FIG.4B**

FIG.5

FIG.6

**FIG.7**

**FIG.8**

18

FIG.9

FIG.10

**FIG.11**

21

**FIG.12**

FIG.13

FIG.14

400

28

301

29

31

FIG.15

Europäisches
Patentamt

European
Patent Office

Office européen
des brevets

# EUROPEAN SEARCH REPORT

Application Number

EP 21 20 3783

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 403 443 A (GINESTET I CUSSO RAMON [ES]) 4 April 1995 (1995-04-04) * column 3; claim 7; figures 1-4 * | 1-14 | INV. B32B5/02 B32B5/08 B32B7/05 |
| X | US 2019/329957 A1 (LANTZ GARY W [US]) 31 October 2019 (2019-10-31) * paragraphs [0044], [0045], [0061]; claims 1-22; figures 1-20 * | 1-14 | B32B7/12 B32B7/14 B32B29/02 B32B29/08 |
| A | GB 2 549 777 A (THE WOOL PACKAGING COMPANY LTD [GB]) 1 November 2017 (2017-11-01) * claims 1-8; figures 1-2 * | 1-14 | |

TECHNICAL FIELDS
SEARCHED        (IPC)

B32B

The present search report has been drawn up for all claims

| Place of search | Date of completion of the search | Examiner |
|---|---|---|
| The Hague | 22 February 2022 | Chatron-Michaud, P |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons
........................................................................................
& : member of the same patent family, corresponding
      document

EPO FORM 1503 03.82 (P04C01)

## ANNEX TO THE EUROPEAN SEARCH REPORT
## ON EUROPEAN PATENT APPLICATION NO.

EP 21 20 3783

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2022

| Patent document cited in search report | | Publication date | Patent family member(s) | | Publication date |
|---|---|---|---|---|---|
| US 5403443 | A | 04-04-1995 | AT | 140990 T | 15-08-1996 |
| | | | CA | 2086839 A1 | 15-11-1992 |
| | | | DK | 0543959 T3 | 11-11-1996 |
| | | | EP | 0513926 A1 | 19-11-1992 |
| | | | EP | 0543959 A1 | 02-06-1993 |
| | | | ES | 1017407 U | 16-12-1991 |
| | | | ES | 2092682 T3 | 01-12-1996 |
| | | | FI | 925760 A | 18-12-1992 |
| | | | GR | 3021179 T3 | 31-12-1996 |
| | | | JP | H05509269 A | 22-12-1993 |
| | | | NO | 180242 B | 02-12-1996 |
| | | | UA | 25903 C2 | 26-02-1999 |
| | | | US | 5403443 A | 04-04-1995 |
| | | | WO | 9220863 A1 | 26-11-1992 |
| US 2019329957 | A1 | 31-10-2019 | AU | 2016304711 A1 | 01-03-2018 |
| | | | AU | 2021225159 A1 | 30-09-2021 |
| | | | CA | 2995339 A1 | 16-02-2017 |
| | | | EP | 3334665 A1 | 20-06-2018 |
| | | | HK | 1256949 A1 | 04-10-2019 |
| | | | US | 2017043937 A1 | 16-02-2017 |
| | | | US | 2019329957 A1 | 31-10-2019 |
| | | | US | 2020180838 A1 | 11-06-2020 |
| | | | WO | 2017027189 A1 | 16-02-2017 |
| GB 2549777 | A | 01-11-2017 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010258574 A1